# EUROPÄISCHE PATENTANMELDUNG

(11) **EP 4 523 788 A1**
(43) Veröffentlichungstag der Anmeldung: **19.03.2025**
(21) Anmeldenummer: 23197582.2
(22) Anmeldetag: 15.09.2023
(51) Int. Cl.: B01J 23/42, B01J 23/44, B01J 35/30, B01J 37/02, F01N 3/00

(54) **VERFAHREN ZUR GEZIELTEN AUSSTATTUNG EINES TEILBEREICHS EINES DURCHSTRÖMUNGSKÖRPERS MIT EDELMETALL UND EINSTÜCKIGER MIT EDELMETALL AUSGESTATTETER DURCHSTRÖMUNGSKÖRPER**

(71) Anmelder: Heraeus Precious Metals GmbH & Co. KG, 63450 Hanau (DE)
(72) Erfinder: Bonifer, Marcus, 63450 Hanau (DE); Joshi, Pragati, 63450 Hanau (DE); Jakob, Christiane, 63450 Hanau (DE); Kunert, Niels, 71334 Waiblingen (DE)
(74) Vertreter: Heraeus IP

(57) **Zusammenfassung**

Die vorliegende Erfindung betrifft ein Verfahren zur Ausstattung eines Durchströmungskörpers mit mindestens einem Edelmetall, wobei nur ein Teilbereich des Durchströmungskörpers mit dem mindestens einen Edelmetall ausgestattet wird. Das Verfahren umfasst das nichtimmersive Beschichten mit einer Zusammensetzung, die eine Edelmetallkomponente und ein Lösungsmittel enthält, wobei zunächst die gesamte Menge der aufgebrachten Zusammensetzung auf dem Teilbereich des Durchströmungskörpers verleibt. Die Erfindung betrifft außerdem einen einstückigen Durchströmungskörper mit mindestens einem mit mindestens einem Edelmetall ausgestatteten Teilbereich, wobei der mindestens eine Teilbereiche zumindest teilweise von einem oder mehreren weiteren Teilbereichen des Durchströmungskörpers umschlossen ist. Außerdem betrifft die Erfindung einen Katalysator, umfassend einen erfindungsgemäßen einstückigen Durchströmungskörper oder einen erfindungsgemäß ausgestatteten Durchströmungskörper, einen Abgasschalldämpfer umfassend einen solchen einstückigen Durchströmungskörper oder einen solchen ausgestatteten Durchströmungskörper, sowie ein Verfahren zur Abgasnachbehandlung mit einem solchen einstückigen Durchströmungskörper oder einem solchen ausgestatteten Durchströmungskörper.

## Beschreibung

Die vorliegende Erfindung betrifft ein Verfahren zur Ausstattung eines Durchströmungskörpers mit mindestens einem Edelmetall, wobei nur ein Teilbereich A des Durchströmungskörpers mit dem mindestens einen Edelmetall ausgestattet wird. Das Verfahren umfasst das nicht-immersive Beschichten mit einer Zusammensetzung, die eine Edelmetallkomponente und ein Lösungsmittel enthält, wobei zunächst die gesamte Menge der aufgebrachten Zusammensetzung auf dem Teilbereich A des Durchströmungskörpers verleibt. Die Erfindung betrifft außerdem einen einstückigen Durchströmungskörper mit mindestens einem mit mindestens einem Edelmetall ausgestatteten Teilbereich A, wobei der mindestens eine Teilbereich A zumindest teilweise von einem oder mehreren weiteren Teilbereichen B des Durchströmungskörpers umschlossen ist. Außerdem betrifft die Erfindung einen Katalysator, umfassend einen erfindungsgemäßen einstückigen Durchströmungskörper oder einen erfindungsgemäß ausgestatteten Durchströmungskörper, einen Abgasschalldämpfer umfassend einen solchen einstückigen Durchströmungskörper oder einen solchen ausgestatteten Durchströmungskörper, sowie ein Verfahren zur Abgasnachbehandlung mit einem solchen einstückigen Durchströmungskörper oder einem solchen ausgestatteten Durchströmungskörper.

Durchströmungskörper, beispielsweise in Form von Drahtkörpern, werden in Katalysatoren eingesetzt, in denen eine große Oberfläche zum Inkontaktbringen eines zu behandelnden Materials mit einer katalytisch aktiven Komponente entscheidend ist. Typischerweise kommen solche Katalysatoren bei der Reinigung von Abgasen zum Einsatz, beispielsweise aus Verbrennungsmotoren. Die JP 2009156158 A schlägt vor, solche Durchströmungskörper als Katalysatoren in Schalldämpfern einzusetzen.

Als katalytisch aktive Komponente haben sich insbesondere Edelmetalle bewährt. Durchströmungskörper werden meist in s.g. Washcoat-Verfahren beschichtet wie beispielswiese in der CN 104588036 A beschrieben. Dabei wird der zu beschichtende Durchströmungskörper ganz oder teilweise mit einer Suspension, enthaltend ein Lösungsmittel, mindestens eine Trägerkomponente und optional eine Edelmetallkomponente, in Kontakt gebracht, beispielsweise durch Eintauch- oder Saugverfahren. Falls zunächst eine edelmetallfreie Washcoat-Suspension aufgebracht wird, erfolgt die Ausstattung mit Edelmetall in einem weiteren Verfahrensschritt, bei dem edelmetallhaltige Lösung auf den vorbeschichteten Durchströmungskörper aufgebracht wird. Die Suspension oder edelmetallhaltige Lösung wird dabei im Überschuss eingesetzt, es wird also mehr Lösung-Volumen benötigt, als zur Benetzung der zu beschichtenden Oberfläche des Durchströmungskörpers notwendig wäre. In beiden Fällen führt dies zu einer höheren Kostenbindung des einzusetzenden Edelmetalls im Herstellungsprozess.

Außerdem kann in solchen Verfahren Strömungsverhältnissen, die unter den Einsatzbedingungen eines Katalysators mit einem solchen Durchströmungskörper herrschen, nicht umfassend Rechnung getragen werden. Es kann zum Beispiel der Fall sein, dass die katalytische Aktivität nur im Kernbereich des Durchströmungskörpers wünschenswert ist. So kann eine Isolierung der katalytisch aktiven Zone von den Randbereichen vorteilhaft sein, da so die entstehende Hitze bei der katalytischen Reaktion sich nicht auf eine mögliche Fixierung des Durchströmungskörpers im Katalysatorgehäuse auswirkt.

Eine gezielte und partielle Ausstattung von Durchströmungskörpern mit Edelmetall ist daher wünschenswert. Durchströmungskörper, bestehend aus mehreren Teilbereichen, sind aus dem Stand der Technik zur Lösung dieses Problems bekannt. Die US 2012183460 A1 offenbart beispielsweise einen Durchströmungskörper aus einem Stapel mehrerer Lagen, die unterschiedliche Zonen bilden.

Jedoch erfordert die Herstellung solcher Körper zusätzliche Schritte und/oder die modulare Ausstattung der einzelnen Teilkörper.

Es ist die Aufgabe der vorliegenden Erfindung ein Verfahren zur Herstellung eines mit mindestens einem Edelmetall ausgestatteten Körpers zur Verfügung zu stellen, das es ermöglicht die katalytisch aktiven Komponenten zielgenau zu platzieren und das Edelmetallinventar des Durchströmungskörpern zu minimieren. Außerdem ist es Aufgabe, die Menge von einzusetzendem Edelmetall während des Herstellungsverfahrens zu reduzieren.

Überraschenderweise hat sich gezeigt, dass die der vorliegenden Erfindung zugrunde liegende Aufgabe mindestens teilweise gelöst wird durch ein Verfahren zur Ausstattung eines Teilbereichs A eines Durchströmungskörpers mit mindestens einem Edelmetall, wobei das Verfahren die folgenden Schritte umfasst:
(i) Bereitstellung des Durchströmungskörpers,
(ii) Bereitstellung einer Zusammensetzung enthaltend eine Edelmetallkomponente und ein Lösungsmittel,
(iii) Nicht-immersives Beschichten des Teilbereichs A des Durchströmungskörper mit der Zusammensetzung, wobei das nicht-immersive Beschichten durch Aufbringen der Zusammensetzung auf den Teilbereich A erfolgt und die gesamte Menge der Zusammensetzung, die auf den Teilbereich A aufgebracht wird, zunächst auf dem Teilbereich A verbleibt,
(iv) Entfernung der flüchtigen Bestandteile der Zusammensetzung von dem Teilbereich A.

Mit dem erfindungsgemäßen Verfahren lässt sich also ein Durchströmungskörper herstellen, der mindestens zwei Teilbereiche (im weiteren als Teilbereich A und Teilbereich B bezeichnet) aufweist, wobei mindestens einer der Teilbereiche mit mindestens einem Edelmetall ausgestattet wird. Der weitere Teilbereich oder die weiteren Teilbereiche (Teilbereich B) können dabei mit keiner Edelmetallkomponente, einer anderen Edelmetallkomponente oder weniger Edelmetallkomponente ausgestattet sein. Solche Durchströmungskörper werden typischerweise in Katalysatoren eingesetzt, wobei das Edelmetall als katalytisch aktive Spezies fungiert.

Das erfindungsgemäße Verfahren ist besonders vorteilhaft, weil es die selektive Gestaltung von Durchströmungskörpern erlaubt. Durch das gezielte und partielle Auftragen der edelmetallhaltigen Zusammensetzung kann außerdem die Menge der benötigten Zusammensetzung minimiert werden. Dadurch kann die Menge der einzusetzenden Edelmetallkomponente im Vergleich zu Verfahren, in denen ein Überschuss an Zusammensetzung verwendet wird, reduziert werden. Dieser Vorteil ergibt sich besonders gegenüber immersiven Verfahren, insbesondere Tauchverfahren. Außerdem kann durch die Verwendung einer geeigneten Zusammensetzung im Gegensatz zu Beschichtungsverfahren, die zum schichtweisen Aufbau von Beschichtungen vorgesehen sind, ein dreidimensionaler Teilbereich des Durchströmungskörpers selektiv ausgestattet werden. Ein weiterer Vorteil liegt in der einfachen Ausführung des erfindungsgemäßen Verfahrens, das keine weiteren Hilfsmittel wie Masken oder Abdeckungen benötigt, um gezielt Teilbereiche zu beschichten.

In dem erfindungsgemäßen Verfahren wird ein Durchströmungskörper partiell mit Edelmetall ausgestattet. Unter einem Durchströmungskörper wird ein von Gas durchströmbarer Körper verstanden, der ein durchgängiges Netzwerk von Kanälen und/oder Poren aufweist. Mit anderen Worten kann der Durchströmungskörper als poröse Matrix mit einer Vielzahl von unregelmäßig oder regelmäßig geformten Durchgängen beschrieben werden. Durchströmungskörper zeichnen sich durch eine große Oberfläche pro Gesamtvolumen aus.

Bevorzugterweise handelt es sich bei dem Durchströmungskörper um einen einstückigen Körper. Vorteilhafterweise ist der Durchströmungskörper formstabil.

Die Form des Durchströmungskörpers ist dabei nicht weiter beschränkt. Der Durchströmungskörper kann beispielsweise in Form eines Würfels, eines Quaders, einer Kugel, einer Pyramide, eines Kegels oder eines Zylinders ausgestaltet sein.

Typischerweise weist der Durchströmungskörper mindestens eine Stirnseite auf, bevorzugt genau zwei Stirnseiten, wie beispielsweise im Fall eines Zylinders oder Quaders. Vorteilhaft weist der Durchströmungskörper eine sich von der mindestens einen Stirnseite erstreckende Umfangsfläche auf, im Fall eines Quaders der Zylinders erstreckt sich die Umfangsfläche von der der ersten Stirnseite zur zweiten Stirnseite. Die mindestens eine Stirnseite und die Umfangsfläche bilden die Randbereiche des Durchströmungskörpers, genauer gesagt bilden sie die Oberflächen der Randbereiche des Durchströmungskörpers.

Die Geometrie des Durchströmungskörpers wird durch eine zentrale Längsachse und eine dazu senkrechte Querachse bestimmt. Typischerweise ist die Längsachse länger als die Querachse, wie beispielsweise bei einem Quader oder einem Zylinder. In diesen Fällen erstreckt sich die Längsachse von der ersten zur zweiten Stirnseite.

Das Gesamtvolumen des Durchströmungskörpers kann beispielsweise 10 cm³ bis 200 cm³, insbesondere 20 cm³ bis 100 cm³ betragen. Die Dichte des Durchströmungskörpers beträgt vorteilhafterweise 0,6 g/cm³ bis 2 g/cm³, insbesondere 0,9 g/cm³ bis 1,7 g/cm³.

Im Rahmen dieser Anmeldung gelten die Bereichsgrenzen als beinhaltet, wenn Bereiche genannt werden.

Der Durchströmungskörper umfasst typischerweise ein keramisches Material oder ein metallisches Material. Bevorzugt kann der Durchströmungskörper Cordierit (SiO₂-Al₂O₃-MgO), Siliciumcarbid (SiC), Titan, eine Eisenlegierung wie z.B. eine Fe-Cr-Al-Legierung oder einen hitzebeständigen Stahl, insbesondere 1.4767 oder eine Nickellegierung wie z.B. eine Ni-Cr-Legierung, eine Ni-Cr-Al-Legierung, eine Ni-Cr-Fe-Legierung, insbesondere 2.4851, umfassen.

Bei dem Durchströmungskörper kann es sich um einen Schaum, einen aus unregelmäßig angeordneten Fasern bestehenden Körper, einen Körper aus Streckmetall oder einen Drahtkörper handeln, besonders bevorzugt sind Durchströmungskörper in Form eines Drahtkörpers. Unter einem Drahtkörper wird ein Körper verstanden, der aus einem Draht oder mehreren Drähten gebildet wird. Auch ein Drahtkörper, der aus mehreren Drähten gebildet wird, kann ein einstückiger Durchströmungskörper sein. Ein Draht ist dabei ein dünnes, langgestrecktes, biegsames Metallteil. Der Draht weist vorzugsweise einen runden Querschnitt auf. Auch ein eckiger Querschnitt kann vorteilhaft sein. Der Querschnitt des Drahts ist über dessen Länge im Rahmen der üblichen Fertigungstoleranzen vorteilhafterweise konstant.

Insbesondere kann es sich bei dem Drahtkörper um ein Drahtgestrick, ein Drahtgewebe, einen in Form gepressten Metalldraht, eine Drahtmatte oder eine aufgewickelte Drahtmatte handeln.

Der Durchmesser des Drahtes des Drahtkörpers oder, bei unrundem Querschnitt, die größte Erstreckung des Drahtes im Querschnitt beträgt vorteilhaft von 0,1 mm bis 2 mm, insbesondere von 0,2 mm bis 1 mm. Als besonders vorteilhaft wird ein Durchmesser von 0,3 mm bis 1 mm angesehen. Besonders bevorzugt beträgt der Durchmesser des Drahtes höchstens 0,5 mm.

Die vorliegende Erfindung betrifft ein Verfahren zur Ausstattung des Durchströmungskörpers mit mindestens einem Edelmetall. Unter einem Edelmetall wird im Rahmen der vorliegenden Erfindung ein Metall ausgewählt aus der Gruppe bestehend aus Platinmetallen, Gold und Silber verstanden. Unter Platinmetallen sind die Metalle der sogenannten Platingruppe, also Platin (Pt), Palladium (Pd), Iridium (Ir), Rhodium (Rh), Osmium (Os) und Ruthenium (Ru), zu verstehen.

Die verwendeten Bezeichnungen "Metall", "Edelmetall" oder beispielsweise "Platin" beinhalten hierbei keine Aussage über deren Oxidationsstufe. Mit anderen Worten wird damit nicht das Vorliegen des elementaren Zustands mit der Oxidationsstufe 0 bezeichnet. Das Metall, Edelmetall oder beispielsweise Platin kann elementar, also in der Oxidationsstufe (0) oder in einer höheren Oxidationsstufe vorliegen.

Edelmetalle weisen häufig eine katalytische Aktivität für bestimmte Reaktionen auf, beispielsweise für die Zersetzung von Abgaskomponenten. Das mindestens eine Edelmetall stellt daher eine katalytisch wirksame Komponente eines entsprechend ausgestatteten Durchströmungskörpers dar.

Das mindestens eine Edelmetall ist bevorzugt ausgewählt aus der Gruppe bestehend aus Platin (Pt), Palladium (Pd), Iridium (Ir), Rhodium (Rh), Ruthenium (Ru) und deren Kombinationen, insbesondere handelt es sich bei dem mindestens einen Edelmetall um Platin, Palladium, Rhodium, eine Kombination von Platin und Rhodium oder eine Kombination von Platin, Palladium und Rhodium.

In Schritt (ii) des erfindungsgemäßen Verfahrens wird eine Zusammensetzung enthaltend eine Edelmetallkomponente und ein Lösungsmittel bereitgestellt. Die Edelmetallkomponente ist dabei eine Komponente des mindestens einen Edelmetalls, mit dem der Teilbereich des Durchströmungskörpers ausgestattet werden soll.

Unter einer "Edelmetallkomponente" ist in diesem Zusammenhang eine Komponente zu verstehen, die zumindest teilweise aus dem mindestens einen Edelmetall besteht. Die Edelmetallkomponente kann eine Vorläuferkomponente einer katalytisch wirksamen Spezies sein, beispielsweise in Form einer entsprechenden Edelmetallverbindung. Geeignete Edelmetallverbindungen sind Komplexe, Organometallverbindungen oder Salze des Edelmetalls, beispielsweise Nitrate, Halogenide, Acetylacetonate oder Acetate, aber auch eine Vielzahl weiterer Salze, die dem Fachmann bekannt sind. Die Edelmetallkomponente kann auch bereits in Form einer katalytisch wirksamen Spezies vorliegen. Bei der Edelmetallkomponente kann es sich auch um zumindest teilweise metallisches Edelmetall handeln, beispielsweise in Form von Partikeln, insbesondere in Form von Nanopartikeln.

Die Zusammensetzung kann auch mehrere Edelmetallkomponenten enthalten. Es kann sich in diesem Fall um mehrere Komponenten des gleichen Edelmetalls oder unterschiedlicher Edelmetalle handeln. Bevorzugt handelt es sich bei der mindestens einen Edelmetallkomponente um eine Komponente von einem Edelmetall ausgewählt aus der Gruppe bestehend aus Platin (Pt), Palladium (Pd), Iridium (Ir), Rhodium (Rh), Ruthenium (Ru) und im Fall von mehreren Edelmetallkomponenten aus deren Kombinationen, insbesondere bevorzugt sind Kombinationen von Platin, Palladium oder Rhodium, beispielsweise Platin und Palladium, Platin und Rhodium oder Platin, Palladium und Rhodium.

Die Menge der Edelmetallkomponente des mindestens einen Edelmetalls in der Zusammensetzung kann in weiten Bereichen variieren und wird bestimmt durch die beabsichtige Beladung des Durchströmungskörpers mit dem mindestens einen Edelmetall. Insbesondere wird die Menge des mindestens einen Edelmetalls durch die beabsichtigte Beladung bestimmt. Die "Menge des mindestens einen Edelmetalls" bezieht sich auf den Anteil des mindestens einen Edelmetalls in der Zusammensetzung und nicht zwingend auf die Menge der Edelmetallkomponente. Im Fall, dass es sich bei der Edelmetallkomponente um eine Edelmetallverbindung handelt, wird damit also nicht die Menge der Edelmetallverbindung bezeichnet, sondern die Menge des Edelmetalls in der Edelmetallverbindung. Bevorzugt umfasst die Zusammensetzung 0,5 bis 90 Gew.-% des mindestens einen Edelmetalls, bezogen auf das Gesamtgewicht der Zusammensetzung umfassend das mindestens eine Lösungsmittel und die mindestens eine Edelmetallkomponente. In einer Ausführungsform umfasst die Zusammensetzung 1 bis 80 Gew.-% des mindestens einen Edelmetalls, bevorzugt 5 bis 70 Gew.-%. Besonders gute Ergebnisse werden erhalten, wenn die Zusammensetzung das mindestens eine Edelmetall in einer Menge von mindestens 0,5 Gew.-% enthält, insbesondere mindestens 1 Gew.-%, vorzugsweise mindestens 5 Gew.-%, bevorzugt mindestens 10 Gew.-%.

Im Fall, dass das mindestens eine Edelmetall Iridium umfasst, kann es sich bei der Edelmetallkomponente um eine Ir(IV)-Verbindung handeln, z.B. ein Ir(IV)-Salz, eine Ir(IV)-Komplexverbindung oder eine Ir-Organometallverbindung. Beispiele für geeignete Iridiumverbindungen sind Iridiumchlorid, Iridiumacetat, Iridiumacetylacetonat, Iridiumsulfat, und Dihydrogenhexachloroiridat.

Im Fall, dass das mindestens eine Edelmetall Platin umfasst, kann es sich bei der Edelmetallkomponente um eine Platin(II)- oder eine Platin(IV)-Verbindung handeln, z.B. ein Pt(II)- oder Pt(IV)-Salz, eine Pt(II)- oder Pt(IV)-Komplexverbindung oder eine Pt(II)- oder Pt(IV)-Organometallverbindung. Als Beispiele für geeignete Platinverbindungen können Platinhalogenide, wie Platin(II)chlorid oder Platin(IV)chlorid oder eine Säure davon, Hexachloroplatinsäure oder ein Salz dieser Säure, Platinsäure oder ein Salz dieser Säure, Hydroxyethylammoniumhexahydroxoplatinat, Ammoniumhexachloroplatinat, Ammoniumtetrachloroplatinat, Kaliumtetrachloroplatinat, Kaliumhexachloroplatinat, Natriumtetrachloroplatinat, Kaliumtetrahydroxyplatinat, Platinnitrat, Platinsulfit, Platinethanolamin, Platinacetylacetonat, Platinoxalat oder eine Mischung aus mindestens zwei dieser Verbindungen genannt werden.

Im Fall, dass das mindestens eine Edelmetall Palladium umfasst, kann es sich bei der Edelmetallkomponente um eine Palladium(II)- oder eine Palladium(IV)-Verbindung handeln, z.B. ein Pd(II)- oder Pd(IV)-Salz, eine Pd(II)- oder Pd(IV)-Komplexverbindung oder eine Pd(II)- oder Pd(IV)-Organometallverbindung. Als beispielhafte Palladiumverbindungen können Palladiumhalogenide, wie Palladium(II)chlorid, Palladium(II)bromid oder Palladium(IV)chlorid oder eine Säure davon, Palladiumacetat, Palladiumnnitrat, Palladiumacetylacetonat, Palladiumsulfat, Palladiumoxalat, Hydroxyethylammoniumhexahydroxopalladat, Ammoniumhexachloropalladat, Ammoniumtetrachloropalladat, Kaliumtetrachloropalladat, Kaliumhexachloropalladat, Natriumtetrachloropalladat, Kaliumtetrahydroxypalladat, Diammindichloropalladium, Tetraaminpalladiumnitrat, Tetraaminpalladiumchlorid, Tetraaminpalladiumhydroxid, Tetraaminpalladiumsulfat oder eine Mischung aus mindestens zwei dieser Verbindungen genannt werden.

Im Fall, dass das mindestens eine Edelmetall Ruthenium umfasst, kann es sich bei der Edelmetallkomponente um eine Ruthenium(III)- oder eine Ruthenium (IV)-Verbindung handeln, z.B. Ru(III)- oder Ru(IV)-Salze, Ru(III)- oder Ru(IV)-Komplexverbindungen oder Ru(III)- oder Ru(IV)-Organometallverbindungen. Als beispielhafte Rutheniumverbindungen können Nitrate, Acetylacetonate oder Acetate und Halogenide genannt werden. Beispiele für geeignete Rutheniumverbindungen umfassen Rutheniumnitrat, Rutheniumacetat, Rutheniumpentacarbonyl, Rutheniumacetylacetonat, Rutheniumoxalat, Ruthenocen und Rutheniumnitrosylnitrat oder eine Mischung aus mindestens zwei dieser Verbindungen genannt werden.

Im Fall, dass das mindestens eine Edelmetall Rhodium umfasst, kann es sich bei der Edelmetallkomponente um eine Rh(III)-Verbindung handeln, z.B. ein Rh(III)-Salz, eine Rh(III)-Komplexverbindung oder eine Rh-Organometallverbindung. Beispiele für geeignete Rhodiumverbindungen sind Rhodiumhalogenide, wie Rhodium(III)chlorid, oder eine Säure davon, Rhodiumnitrat, Rhodiumacetylacetonat, Rhodiumumsulfat oder eine Mischung aus mindestens zwei dieser Verbindungen.

Die Zusammensetzung enthält neben der mindestens einen Edelmetallkomponente ein Lösungsmittel. Bei dem Lösungsmittel handelt es sich bevorzugt um ein wässriges Lösungsmittel, Aceton oder einen Alkohol, vorteilhafterweise umfasst das Lösungsmittel Wasser. Als vorteilhaft hat sich herausgestellt, wenn das Lösungsmittel hauptsächlich aus Wasser besteht, insbesondere umfasst das Lösungsmittel mindestens 70 Gew.-% Wasser, bevorzugter mindestens 80 Gew.-%, besonders bevorzugt mindestens 90 Gew.-% Wasser. Es kann auch vorteilhaft sein, wenn das Lösungsmittel nur Wasser umfasst, also vollständig aus Wasser besteht.

Bei der Zusammensetzung handelt es sich bevorzugt um eine nicht-feste Zusammensetzung. Insbesondere kann die Zusammensetzung flüssig oder viskos vorliegen, beispielsweise in Form einer Lösung, einer Emulsion, einer Suspension, einer Dispersion oder als Paste. Eine Suspension im Sinne der vorliegenden Erfindung ist eine Mischung aus einem Feststoff und einer Flüssigkeit, wobei der Feststoff in Form von fein verteilten Festkörpern in der Flüssigkeit gleichmäßig verteilt vorliegt.

Bevorzugterweise weist die Zusammensetzung thixotrope Eigenschaften auf. Wie dem Fachmann bekannt, spricht man von thixotropen Eigenschaften, wenn ein Fluid unter konstanter und anhaltender Krafteinwirkung (Scherbelastungsphase) eine niedrigere Viskosität aufweist als unter statischen Bedingungen und sich die statische Viskosität wieder einstellt, sobald die Kraft nicht mehr wirkt (vollständiger Wiederaufbau der Viskosität in der Ruhephase).

In bevorzugten Ausführungsformen weist die Zusammensetzung eine statische Viskosität von mindestens 500 mPa*s auf, bevorzugter mindestens 1000 mPa*s, insbesondere mindestens 20.000 mPa*s. Geeignete Zusammensetzungen weisen beispielsweise eine statische Viskosität im Bereich von 500 bis 100000 mPa*s auf, bevorzugt im Bereich von 1000 bis 50000 mPa*s, insbesondere bevorzugt im Bereich von 2000 bis 30000 mPa*s. Die Bestimmung der statischen Viskosität einer Zusammensetzung kann gemäß einer später beschriebenen Messung erfolgen. Die Bestimmung der statischen Viskosität ist dem Fachmann auch als CS-Messung (konstante Scherspannung, *engl. controlled stress*) bekannt.

In bevorzugten Ausführungsformen weist die Zusammensetzung eine dynamische Viskosität von nicht mehr als 2500 mPa*s auf, bevorzugter nicht mehr als 1500 mPa*s, insbesondere nicht mehr als 1000 mPa*s. Durch die Verwendung einer Zusammensetzung mit einer dynamischen Mindestviskosität kann sichergestellt werden, dass die Zusammensetzung gezielt auf den Durchströmungskörper aufgebracht werden kann. Geeignete Zusammensetzungen weisen beispielsweise eine dynamische Viskosität im Bereich von 50 bis 2500mPa*s auf, bevorzugt im Bereich von 100 bis 1500 mPa*s, insbesondere bevorzugt im Bereich von 200 bis 1000 mPa*s. Die Bestimmung der dynamischen Viskosität einer Zusammensetzung kann gemäß einer später beschriebenen Messung erfolgen. Die Bestimmung der dynamischen Viskosität ist dem Fachmann auch als CR-Messung (konstante Scherrate, *engl. controlled rate*) bekannt.

Bevorzugterweise weist die Zusammensetzung einen Thixotropie-Index TI von mindestens 5 auf, insbesondere mindestens 10, besonders bevorzugt mindestens 20. Unter dem Thixotropie-Index TI wird das Verhältnis von statischer zu dynamischer Viskosität verstanden. Im Rahmen der vorliegenden Erfindung wurde überraschend erkannt, dass die Verwendung solcher Zusammensetzungen ein besonders effizientes gezieltes Ausstatten von Strömungskörper-Teilbereichen erlaubt.

Die Viskosität der Zusammensetzung kann mit dem Fachmann bekannten Methoden gezielt eingestellt werden. Bevorzugt enthält die Zusammensetzung ein Verdickungsmittel, beispielsweise einen Polyvinylalkohol, ein Oxid und/oder Hydroxid von Aluminium wie Böhmite, ein Nitrat von Cer, Aluminium oder Zirkon oder ein Hydrokolloid. Unter einem Hydrokolloid versteht der Fachmann eine Substanz, die in Wasser als Kolloid in Lösung gehen kann und ein hohes Vermögen zur Gelbildung zeigt. Typischerweise sind Hydrokolloide Polymere, insbesondere Proteine oder Polysaccharide, die aus natürlichen Quellen wie Pflanzen, Algen oder Tieren gewonnen werden. Das Hydrokolloid kann beispielsweise eine Cellulose, insbesondere eine Methylcellulose oder eine Hydroxycellulose, ein Pektin, ein Alginat, Gelatine, Agar oder ein Carrageen sein.

Bevorzugt enthält die Zusammensetzung mindestens 0,5 Gew.-% des Verdickungsmittels, bezogen auf das Gesamtgewicht der Zusammensetzung, insbesondere mindestens 1,5 Gew.-%, besondere bevorzugt mindestens 2 Gew.-%. Bevorzugterweise enthält die Zusammensetzung weniger als 10 Gew.-% des Verdickungsmittels, insbesondere weniger als 8 Gew.-%, besondere bevorzugt weniger als 5 Gew.-%. Wenn der Anteil des Verdickungsmittels größer ist, ist die Viskosität der Zusammensetzung zu hoch, um sie noch erfindungsgemäß einsetzen zu können. Es hat sich als vorteilhaft herausgestellt, wenn die Zusammensetzung das Verdickungsmittel in einem Bereich von 0,5 bis 10 Gew.-% enthält, insbesondere in einem Bereich von 2 bis 8 Gew.-%.

Bei der Zusammensetzung kann es sich um eine Washcoat-Suspension handeln. Der Begriff "Washcoat" ist dem Fachmann geläufig. Zu unterscheiden ist zwischen einer Washcoat-Suspension und einer damit auf einen makroskopischen Träger, wie beispielsweise einen Durchströmungskörper, applizierbaren bzw. applizierten Washcoat-Schicht.

Wie dem Fachmann bekannt werden Washcoat-Suspensionen eingesetzt, um Katalysatorträger mit einer Washcoat-Schicht auszustatten. Bei den Durchströmungskörpern, die mit dem erfindungsgemäßen Verfahren ausgestattet werden, handelt es sich um solche Katalysatorträger. Bevorzugt enthält die Washcoat-Suspension mindestens einen mikroskopischen Träger, typischerweise ein oxidisches Trägermaterial. Der mikroskopische Träger ist vom makroskopischen Träger, im Fall der vorliegenden Erfindung vom zu beschichtenden Durchströmungskörper, zu unterscheiden.

Das oxidische Trägermaterial kann ein refraktäres Oxid umfassen, bevorzugt ausgewählt aus der Gruppe bestehend aus Aluminiumoxid, Magnesiumoxid, Siliziumoxid, Molybdänoxid, Wolframoxid, Titanoxid, deren Mischoxiden und Verbundoxiden von zwei oder mehr hiervon. Das refraktäre Oxid kann dotiert sein, mit anderen Worten kann das refraktäre Oxid ein Dotierungsmittel enthalten. Refraktäre Oxide, die mit einem Dotiermittel dotiert sind, sind unter Verwendung von auf dem einschlägigen Fachgebiet bekannten Verfahren erhältlich. Geeignete Dotierungsmittel können ausgewählt sein aus der Gruppe bestehend aus Seltenerdmetallen, Übergangsmetallen, Erdalkalimetallen und deren Mischungen. Insbesondere kann das Dotierungsmittel mindestens ein Element ausgewählt sein aus der Gruppe bestehend aus Cer (Ce), Zirkonium (Zr), Titan (Ti), Silicium (Si), Mangan (Mn), Yttrium (Y), Lanthan (La), Barium (Ba), Praseodym (Pr), Gadolinium (Gd), Samarium (Sm), Neodym (Nd) und deren Oxiden. Bevorzugt umfasst das Dotierungsmittel La, Ba, Sr, Zr oder Mn. Besonders bevorzugt ist das refraktäre Oxid ein mit Lanthan oder Lanthanoxid dotiertes Aluminiumoxid, ein mit Lanthan oder Lanthanoxid dotiertes Mischoxid von Aluminiumoxid oder ein mit Lanthan oder Lanthanoxid dotiertes Verbundoxid von Aluminiumoxid.

Bevorzugt umfasst die Washcoat-Suspension das oxidische Trägermaterial zu einem Anteil von 5 bis 50 Gew.-%, besonders bevorzugt zu einem Anteil von 10 bis 40 Gew.-% bezogen auf das Gesamtgewicht der Washcoat-Suspension.

Das oxidische Trägermaterial kann auch eine Sauerstoffspeicherkomponente umfassen, bevorzugt ein Ceroxid und/oder ein Cer-Zirkonium-Oxid. Bei dem Cer-Zirkonium-Oxid kann es sich um Mischoxide oder um Mischungen von Ceroxid (CeOz) und Zirkoniumoxid (ZrOz) handeln. Das oxidische Trägermaterial kann ein refraktäres Oxid und eine Sauerstoffspeicherkomponente umfassen.

Im Fall eines Cer-Zirkonium-Oxid kann es sich sowohl um ein Cer-reiches Oxid als auch um ein Zirkonium-reiches Oxid handeln. Das Cer-Zirkonium-Oxid kann bevorzugt 10 bis 50 Gew.-% Zirkonoxid enthalten, bevorzugt zu 15 bis 40 Gew.-%, bezogen auf das Gesamtgewicht des Cer-Zirkonium-Oxids. Vorzugsweise enthält das Cer-Zirkonium-Oxid Ceroxid in einer Menge von 20 bis 90 Gew.-%, besonders bevorzugt von 40 bis 85 Gew.-%, jeweils bezogen auf das Gesamtgewicht des Cer-Zirkonium-Oxids.

Die Sauerstoffspeicherkomponente kann mindestens ein von Cer verschiedenes Element aus der Gruppe der seltenen Erden umfassen. Das mindestens eine Element aus der Gruppe der seltenen Erden liegt bevorzugt als Oxid vor. Bevorzugt ist das mindestens eine Element der seltenen Erden ausgewählt aus der Gruppe bestehend aus Neodym (Nd), Praseodym (Pr), Lanthan (La) und Hafnium (Hf). Die Sauerstoffspeicherkomponente kann beispielsweise ein Cer-Zirkonium-Lanthanoxid, ein Cer-Zirkonium-Yttriumoxid, ein Cer-Zirkonium-Lanthan-Yttriumoxid, ein Cer-Zirkonium-Neodymoxid, ein Cer-Zirkonium-Praseodymoxid, ein Cer-Zirkonium-Lanthan-Neodymoxid, ein Cer-Zirkonium-Lanthan-Praseodymoxid, ein Cer-Zirkonium-Lanthan-Neodym-Praseodymoxid oder eine Kombination davon umfassen. Dabei kann der Anteil der jeweiligen Seltenerdoxide 2 Gew.-% bis 20 Gew.-%, bevorzugt 5 Gew.-% bis 15 Gew.-% bezogen auf das Gesamtgewicht der Sauerstoffspeicherkomponente betragen.

Bevorzugt umfasst die Washcoat-Suspension die Sauerstoffspeicherkomponente zu einem Anteil von 5 bis 50 Gew.-%, besonders bevorzugt zu einem Anteil von 10 bis 40 Gew.-% bezogen auf das Gesamtgewicht der Washcoat-Suspension.

Es ist bevorzugt, dass das oxidische Trägermaterial eine große BET-Oberfläche aufweist, bevorzugt beträgt die BET-Oberfläche mindestens 30 m²/g, insbesondere mindestens 80 m²/g, besonders bevorzugt mindestens 100 m²/g. Typischerweise beträgt die BET-Oberfläche des oxidischen Trägermaterials zwischen 30 und 300 m²/g, bevorzugt zwischen 50 und 200 m²/g. Die BET-Oberfläche wird auch spezifische Oberfläche genannt und kann nach ISO 9277:2010 mit Stickstoff als Adsorbat bestimmt werden.

Bei dem oxidischen Trägermaterial handelt es sich bevorzugt um ein poröses Material. Das Porenvolumen liegt üblicherweise im Bereich von 0,2 bis 10,0 mUg, insbesondere im Bereich von 0,3 bis 0,8 mL/g. Die durchschnittlichen Porenradien betragen 5 bis 40 nm, insbesondere 10 bis 30 nm. Die Bestimmung des Porenvolumens und der Porendurchmesserverteilung kann mittels Quecksilberporosimetrie gemäß ISO 15901-1:2022 erfolgen.

Im Fall, dass eine Washcoat-Suspension als Zusammensetzung im erfindungsgemäßen Verfahren eingesetzt wird, kann die Edelmetallkomponente geträgert auf einem oxidischen Trägermaterial vorliegen, insbesondere auf einem refraktären Oxid und/oder einer Sauerstoffspeicherkomponente. Darunter ist zu verstehen, dass das oxidische Trägermaterial mit der mindestens einen Edelmetallkomponente ausgestattet ist, also dass die Edelmetallkomponente auf, in oder an dem oxidischen Trägermaterial vorliegt, beispielsweise in Form von einer adsorbierten Vorläuferkomponente, Partikeln oder einer Schicht. Die Ausstattung des oxidischen Trägermaterials kann dabei sowohl auf der Oberfläche als auch im Inneren des oxidischen Trägermaterials vorliegen. Der Begriff "Oberfläche" umfasst hierbei sowohl die äußere als auch die innere Oberfläche, mit anderen Worten ist auch die innenliegende durch Poren gebildete Oberfläche umfasst.

Die Ausstattung eines oxidischen Trägermaterials mit der mindestens einen Edelmetallkomponente kann nach dem Fachmann bekannten Methoden erfolgen, beispielsweise durch Imprägnierung, Ausfällung, Gasphasenabscheidung (*engl. chemical vapor deposition, CVD*) oder Sprühverfahren. Die Ausstattung umfasst dabei typischerweise das Zusammenbringen des oxidischen Trägermaterials mit mindestens einer Edelmetallverbindung, die meist in einer Zubereitung bereitgestellt wird, die mindestens ein Lösungsmittel umfasst. Im Anschluss an das Zusammenbringen kann die Ausfällung und/oder Reduzierung der mindestens einen Edelmetallverbindung sowie ein Trocknungs- und/oder Kalzinierungsschritt erfolgen. Beispielsweise kann die Zubereitung durch Kapillarkräfte getrieben im oder in das oxidische Trägermaterial aufgesogen werden, sodass das Volumen der Zubereitung annähernd dem Porenvolumen des oxidischen Trägermaterials entspricht, dem Fachmann als *"incipient wetness method"* bekannt.

Die Washcoat-Suspension kann die Edelmetallkomponente aber auch in Form einer ungeträgerten Edelmetallverbindung, insbesondere einer Edelmetall-Vorläuferkomponente, enthalten.

Die Zusammensetzung kann auch weitere Komponenten wie Säuren oder Basen zur pH-Wert-Regulierung, Füllstoffe, Bindemittel, Porenbilder, Haftvermittler oder Stabilisatoren enthalten. Solche zusätzlichen Komponenten weisen typischerweise keine katalytische Aktivität auf, sondern verbessern die Verarbeitbarkeit der Zusammensetzung oder die Eigenschaften der daraus hergestellten Beschichtung, beispielsweise durch eine Vergrößerung des Betriebstemperaturbereichs, eine Vergrößerung der Kontaktoberfläche, eine Verbesserung der Haft-Eigenschaften oder ähnliches.

In Schritt (iii) wird der Durchströmungskörper mit der Zusammensetzung beschichtet.

Das nicht-immersive Beschichten erfolgt durch Aufbringen der Zusammensetzung auf einen Teilbereich A des Durchströmungskörpers. Mit anderen Worten erfolgt das Beschichten nur selektiv auf mindestens einem Teilbereich A des Durchströmungskörpers, wodurch eine partielle Beschichtung des Durchströmungskörpers erreicht wird. Insbesondere erfolgt das Beschichten durch das Aufbringen einer vordefinierten Menge der Zusammensetzung auf den zu beschichtenden Teilbereich A.

Das Beschichten erfolgt nicht-immersiv, mit anderen Worten erfolgt das Beschichten nicht durch Eintauchen des Durchströmungskörpers in die Zusammensetzung. Beschichtungstechniken, die auf dem Eintauchen des zu beschichtenden Körpers beruhen, erlauben nicht das beabsichtigte selektive und gezielte Aufbringen der Beschichtung. Insbesondere für Teilbereiche A im Inneren des Durchströmungskörpers, also solche die teilweise oder ganz von einem oder mehreren Teilbereichen B des Durchströmungskörpers umschlossen sind, sind Tauchverfahren nicht geeignet.

Das nicht-immersive Beschichten wird vorteilhafterweise durchgeführt durch ein Verfahren ausgewählt aus der Gruppe bestehend aus Aufpipettieren, Aufpinseln, Stempeln, Aufstreichen, Einspritzen, Aufrollen oder Drucken.

Das Volumen des beschichteten Teilbereichs A beträgt vorteilhaft 5 % bis 90 %, insbesondere 10 % bis 80 % des Gesamtvolumens des Durchströmungskörpers. Besonders vorteilhaft beträgt das Volumen des Teilbereichs A höchstens 60 %, insbesondere höchstens 50 % des Gesamtvolumens des Durchströmungskörpers. Als besonders vorteilhaft hat sich ein Volumen des Teilbereichs A von 15 % bis 30 % des Gesamtvolumens des Durchströmungskörpers erwiesen.

Auch die räumliche Ausdehnung des beschichteten Teilbereichs A kann durch das erfindungsgemäße Verfahren gezielt gesteuert werden. Insbesondere können punkt-, zylinder- oder kugelförmige Teilbereiche A beschichtet werden. Besonders geeignet ist das Verfahren zur Ausstattung von punkt-, zylinder- oder kugelförmigen Teilbereichen A, die zumindest teilweise im Inneren des Durchströmungskörpers angeordnet sind, also teilweise oder vollständig von einem oder mehreren weiteren Teilbereichen B des Durchströmungskörpers umschlossen sind und zumindest teilweise oder vollständig keinen Randbereich des Durchströmungskörpers bilden.

Besonders vorteilhaft ist das Verfahren, wenn sowohl der Durchströmungskörper als auch der mit mindestens einem Edelmetall ausgestattete Teilbereich A zylinderförmig, quaderförmig oder scheibenförmig ausgestaltet sind.

Bevorzugt beträgt die Querschnittsfläche des mit mindestens einem Edelmetall ausgestatteten Teilbereichs A senkrecht zur Längsachse des Durchströmungskörpers nicht mehr als 80 % der Gesamtquerschnittsfläche des Durchströmungskörpers senkrecht zur Längsachse in Richtung der Längsachse, insbesondere nicht mehr als 70 %, bevorzugt nicht mehr als 60 %. Insbesondere beträgt die Querschnittsfläche des Teilbereichs A senkrecht zur Längsachse mehr als 30 % der Gesamtquerschnittsfläche des Durchströmungskörpers senkrecht zur Längsachse in Richtung der Längsachse, bevorzugt mehr als 40%.

Der mit mindestens einem Edelmetall ausgestattete Teilbereich A kann sich entlang der gesamten Länge der Längsachse des Durchströmungskörpers erstrecken. Bevorzugt beträgt die Länge des mit mindestens einem Edelmetall ausgestatteten Teilbereichs A entlang der Längsachse des Durchströmungskörpers nicht mehr als 80 % der Gesamtlänge des Durchströmungskörpers entlang der Längsachse, insbesondere nicht mehr als 70 %, bevorzugt nicht mehr als 60 %. Insbesondere beträgt die Länge des Teilbereichs A entlang der Längsachse mehr als 30 % der Gesamtlänge des Durchströmungskörpers, bevorzugt mehr als 40 %.

Vorteilhaft werden mindestens 50 % der Umfangsfläche des Durchströmungskörpers nicht von dem mit mindestens einem Edelmetall ausgestatteten Teilbereich A gebildet, insbesondere mindestens 80 %, besonders bevorzugt wird die gesamte Umfangsfläche nicht von dem mit mindestens einem Edelmetall ausgestatteten Teilbereich A gebildet. Mit anderen Worten kann es vorteilhaft sein, wenn der mit mindestens einem Edelmetall ausgestattete Teilbereich A nicht an die Umfangsfläche angrenzt.

Vorteilhaft werden mindestens 50 %, insbesondere mindestens 80 % zumindest einer der Stirnseiten nicht von dem mit mindestens einem Edelmetall ausgestatteten Teilbereich A gebildet. In besonders bevorzugter Gestaltung wird diese zumindest eine Stirnseite vollständig nicht von dem mit mindestens einem Edelmetall ausgestatteten Teilbereich A gebildet. Mit anderen Worten grenzt der mit mindestens einem Edelmetall ausgestattete Teilbereich A mindestens an eine Stirnseite nicht an. Besonders vorteilhaft ist das Verfahren, wenn der mit mindestens einem Edelmetall ausgestattete Teilbereich A an keine der Stirnseiten des Durchströmungskörpers angrenzt.

Es kann ebenso bevorzugt sein, dass das nicht-immersive Beschichten auf einem zentralen, zumindest teilweise an keinen Randbereich angrenzenden Teilbereich A des Durchströmungskörpers erfolgt. Insbesondere für solche Ausführungsformen ist das erfindungsgemäße Verfahren besonders vorteilhaft, da zielgerichtet solche innen liegenden Teilbereiche A des Durchströmungskörpers mit Edelmetall ausgestattet werden können.

Die gesamte Menge der Zusammensetzung, die auf den Teilbereich A des Durchströmungskörpers aufgebracht wird, verbleibt zunächst auf dem Durchströmungskörper. Unter der zeitlichen Beschränkung "zunächst" ist hierbei zu verstehen, dass die Zusammensetzung im direkten Anschluss an das Aufbringen auf dem Teilbereich A verbleibt, jedoch optional in weiteren Verfahrensschritten zumindest teilweise wieder entfernt werden kann. Im folgenden Verfahrensschritt (iv) werden zumindest die flüchtigen Teile der Zusammensetzung, insbesondere das Lösungsmittel, entfernt.

Unter der gesamten Menge der Zusammensetzung wird hierbei die Menge verstanden, die beim Aufbringen auf den Teilbereich A des Strömungskörpers gelangt. Insbesondere bei beispielsweise Sprühverfahren ist die eingesetzte Menge Zusammensetzung und die Menge, die tatsächlich auf das zu beschichtende Substrat gelangt nicht identisch. Solche Verluste können zum Beispiel durch Verdampfungsvorgänge von Bestandteilen der Zusammensetzung verursacht werden, insbesondere des Lösungsmittels.

In Schritt (iv) werden die flüchtigen Bestandteile der Zusammensetzung von dem Teilbereich A entfernt. Unter flüchtigen Bestandteilen sind solche Bestandteile zu verstehen, die unter Normalbedingungen verdampfbar sind. Nicht-flüchtige Bestandteile der Zusammensetzung, insbesondere die Edelmetallkomponente oder Teile der Edelmetallkomponente, verbleiben auf dem Teilbereich. Die flüchtigen Bestandteile der Zusammensetzung umfassen insbesondere das Lösungsmittel. Auch Teile der Edelmetallkomponente können flüchtig sein.

Das Entfernen kann durch dem Fachmann bekannte Verfahren erfolgen, wie beispielsweise durch passives Trocknen, Erwärmung oder Entfernen unter vermindertem Druck.

Das erfindungsgemäße Verfahren kann auch weitere Schritte umfassen, beispielsweise einen Schritt zum Ausfällen und/oder Fixieren einer Edelmetall-Vorläuferkomponente, einen Trocknungsschritt und/oder einen Schritt zum Umwandeln einer Edelmetall-Vorläuferkomponente in eine katalytisch wirksame Edelmetallkomponente.

Bevorzugt umfasst die Ausstattung des Durchströmungskörpers mit mindestens einem Edelmetall einen Kalzinierungsschritt. Unter "Kalzinierung" versteht der Fachmann eine thermische Behandlung, bei dem die Fixierung einer metallischen Komponente auf einem Trägermaterial erfolgt. Insbesondere vorteilhaft ist der Kalzinierungsschritt, wenn die Temperatur im Bereich von 150 bis 700 °C liegt, insbesondere 200 bis 600 °C. In bevorzugten Ausführungsformen beträgt die Temperatur mehr als 200 °C, besonders bevorzugt mehr als 300 °C. In bevorzugten Ausführungsformen erfolgt der Trocknungsschritt über einen Zeitraum von 1 bis 24 h, bevorzugt über 2 bis 12 h.

Die Beladung des Durchströmungskörpers mit dem mindestens einen Edelmetall wird so gewählt, dass die Edelmetallausstattung insgesamt möglichst effizient genutzt werden kann. Die Beladung mit dem mindestens einen Edelmetall liegt bevorzugt im Bereich von 0,01 bis 1 g/L, besonders bevorzugt im Bereich von 0,05 bis 0,8 g/L, insbesondere bevorzugt im Bereich von 0,01 bis 0,7 g/L. Die Beladung gibt die Menge des mindestens einen Edelmetalls bezogen auf das Volumen des gesamten Durchströmungskörpers an.

Bevorzugt wird der Teilbereich A des Durchströmungskörpers mit Edelmetall in einem Bereich von 0,1 - 10 g/L ausgestattet, insbesondere in einem Bereich von 0,5 - 8 g/L. Bevorzugterweise wird der Teilbereich A des Durchströmungskörpers mit weniger als 8 g/L des mindestens einen Edelmetalls ausgestattet, insbesondere mit weniger als 5 g/L. Die Ausstattung gibt in diesem Fallt die Menge des mindestens einen Edelmetalls bezogen auf das Volumen des Teilbereichs A an.

Im Vergleich zu einem homogen beschichteten Durchströmungskörper kann durch das erfindungsgemäße Verfahren ein Durchströmungskörper hergestellt werden, bei dem das katalytisch aktive Edelmetall möglichst effizient genutzt wird. Mit anderen Worten kann bei gleichbleibender katalytischer Leistung die Menge an Edelmetall reduziert werden oder bei gleicher Menge an Edelmetall die katalytische Leistung erhöht werden.

Das erfindungsgemäße Verfahren kann auch mehrfach durchgeführt werden, beispielsweise um unterschiedliche Teilbereiche des Durchströmungskörpers mit unterschiedlichen Mengen des mindestens einen Edelmetalls auszustatten oder um verschiedene Teilbereiche mit unterschiedlichen Edelmetallen auszustatten.

In einer vorteilhaften Ausführungsform kann der Durchströmungskörper zunächst vollständig mit einer edelmetallfreien Washcoat-Suspension ausgestattet werden, also mit einer edelmetallfreien Washcoat-Schicht beschichtet werden. Auf bevorzugte Komponenten einer solchen edelmetallfreien Washcoat-Suspension sei auf die oben gemachten Ausführungen verwiesen, die, mit Ausnahme der Angaben zur Edelmetallkomponente, hier ebenso gelten.

Im Anschluss wird das erfindungsgemäße Verfahren durchgeführt, um selektiv Teilbereiche des so vorbehandelten Durchströmungskörpers mit dem mindestens einem Edelmetall auszustatten. In solchen Fällen umfasst der Durchströmungskörper mindestens einen ersten Teilbereich, der mit einer edelmetallfreien Washcoat-Schicht ausgestattet ist, also keine katalytisch wirksame Komponente aufweist und mindestens einen zweiten Teilbereich, der mit einer Washcoat-Schicht und mindestens einem Edelmetall ausgestattet ist. Nur dieser zweite Teilbereich A weist also eine katalytisch wirksame Komponente auf.

In einer weiteren vorteilhaften Ausführungsform kann der Durchströmungskörper zunächst teilweise mit einer edelmetallfreien Washcoat-Suspension ausgestattet werden, also in Teilbereichen mit einer edelmetallfreien Washcoat-Schicht beschichtet werden. Im Anschluss wird das erfindungsgemäße Verfahren durchgeführt, um selektiv Teilbereiche des so vorbehandelten Durchströmungskörpers mit dem mindestens einen Edelmetall auszustatten. In solchen Fällen umfasst der Durchströmungskörper mindestens einen ersten Teilbereich, der weder mit einer Washcoat-Beschichtung noch mit einem Edelmetall ausgestattet ist, mindestens einen zweiten Teilbereich, der nur mit einer edelmetallfreien Washcoat-Schicht ausgestattet ist und mindestens einen dritten Teilbereich, der mit einer Washcoat-Schicht und mindestens einem Edelmetall ausgestattet ist. Nur dieser dritte Teilbereich weist also eine katalytisch wirksame Komponente auf.

Es kann auch bevorzugt sein, dass Teilbereiche des Durchströmungskörpers weder mit einer Washcoat-Beschichtung noch mit einem Edelmetall ausgestattet werden. Eine Kombination aller Varianten ist ebenfalls möglich.

**Die Erfindung betrifft außerdem einen einstückigen Durchströmungskörper** mit mindestens einem mit mindestens einem Edelmetall ausgestatteten Teilbereich A, wobei der mindestens eine Teilbereich A zumindest teilweise von einem oder mehreren weiteren Teilbereichen B des einstückigen Durchströmungskörpers umschlossen ist.

Beim erfindungsgemäßen Durchströmungskörper handelt es sich um einen einstückigen Durchströmungskörper. Mit anderen Worten ist der Durchströmungskörper nicht aus mehreren Einzelkörpern zusammengesetzt. Der einstückige Durchströmungskörper kann jedoch mehrere Komponenten aufweisen, beispielsweise kann er für Fälle, in denen es sich um einen Drahtkörper handelt, mehrere Drähte umfassen, die den einstückigen Durchströmungskörper bilden.

Die einstückige Ausgestaltung des erfindungsgemäßen Durchströmungskörpers ist besonders vorteilhaft, da sie eine Minimierung von Komponenten erlaubt, um einen Durchströmungskörper mit einem von mindestens einem weiteren Teilbereichen B umschlossenen Teilbereich A bereit zu stellen. Die Teilbereiche A und B unterscheiden sich insbesondere in der EdelmetallAusstattung, wie beispielsweise der Beladung mit Edelmetall, der Art des Edelmetalls oder der Kombination von mehreren Edelmetallen. Der Teilbereich oder die Teilbereiche B können insbesondere edelmetallfrei sein.

Die Form des einstückigen Durchströmungskörpers ist dabei nicht weiter beschränkt. Der einstückige Durchströmungskörper kann beispielsweise in Form eines Würfels, eines Quaders, einer Kugel, einer Pyramide, eines Kegels oder eines Zylinders ausgestaltet sein.

Typischerweise weist der einstückige Durchströmungskörper mindestens eine Stirnseite auf, bevorzugt genau zwei Stirnseiten, wie beispielsweise im Fall eines Zylinders oder Quaders. Vorteilhaft weist der einstückige Durchströmungskörper eine sich von der mindestens einen Stirnseite erstreckende Umfangsfläche auf, im Fall eines Quaders der Zylinders erstreckt sich die Umfangsfläche von der der ersten Stirnseite zur zweiten Stirnseite. Die mindestens eine Stirnseite und die Umfangsfläche bilden die Randbereiche des einstückigen Durchströmungskörpers.

Die Geometrie des einstückigen Durchströmungskörpers wird durch eine zentrale Längsachse und eine dazu senkrechte Querachse bestimmt. Typischerweise ist die Längsachse länger als die Querachse, wie beispielsweise bei einem Quader oder einem Zylinder. In diesen Fällen erstreckt sich die Längsachse von der ersten zur zweiten Stirnseite.

Das Gesamtvolumen des einstückigen Durchströmungskörpers kann beispielsweise 10 cm³ bis 200 cm³ betragen, insbesondere 20 cm³ bis 100 cm³. Die Dichte des einstückigen Durchströmungskörpers beträgt vorteilhafterweise 0,6 g/cm³ bis 2 g/cm³, insbesondere 0,9 g/cm³ bis 1,7 g/cm³.

Der einstückige Durchströmungskörper umfasst typischerweise ein keramisches Material oder ein metallisches Material. Bevorzugt kann der einstückige Durchströmungskörper Cordierit (SiO₂-Al₂O₃-MgO), Siliciumcarbid (SiC), Titan, eine Eisenlegierung wie z.B. eine Fe-Cr-Al-Legierung oder einen hitzebeständigen Stahl, insbesondere 1.4767 oder eine Nickellegierung wie z.B. eine Ni-Cr-Legierung, eine Ni-Cr-Al-Legierung, eine Ni-Cr-Fe-Legierung, insbesondere 2.4851, umfassen.

Bei dem einstückigen Durchströmungskörper kann es sich um einen Schaum, einen aus unregelmäßig angeordneten Fasern bestehenden Körper, einen Körper aus Streckmetall odr einem Metallblech oder einen Drahtkörper handeln, besonders bevorzugt sind Durchströmungskörper in Form eines Drahtkörpers. Der Draht weist vorzugsweise einen runden Querschnitt auf. Auch ein eckiger Querschnitt kann vorteilhaft sein. Der Querschnitt des Drahts ist über dessen Länge im Rahmen der üblichen Fertigungstoleranzen konstant.

Insbesondere kann es sich bei dem Drahtkörper um ein Drahtgestrick, ein gewirktes oder gewobenes Drahtgewebe, einen in Form gepressten Metalldraht, eine Drahtmatte oder eine aufgewickelte Drahtmatte handeln.

Der Durchmesser des Drahtes des Drahtkörpers oder, bei unrundem Querschnitt, die größte Erstreckung des Drahtes im Querschnitt beträgt vorteilhaft von 0,1 mm bis 2 mm, insbesondere von 0,2 mm bis 1 mm. Als besonders vorteilhaft wird ein Durchmesser von 0,3 mm bis 1 mm angesehen. Besonders bevorzugt beträgt der Durchmesser des Drahtes höchstens 0,5 mm.

Mindestens ein Teilbereich A des einstückigen Durchströmungskörpers ist mit mindestens einem Edelmetall ausgestattet. Der mindestens eine Teilbereich A kann mit unterschiedlichen Verfahren mit dem Edelmetall ausgestattet sein, insbesondere mit dem erfindungsgemäßen Verfahren wie vorangegangen ausgeführt.

Das mindestens eine Edelmetall, mit dem der Teilbereich A ausgestattet ist, ist bevorzugt ausgewählt aus der Gruppe bestehend aus Platin (Pt), Palladium (Pd), Iridium (Ir), Rhodium (Rh), Ruthenium (Ru) und deren Kombinationen, insbesondere handelt es sich bei dem mindestens einen Edelmetall um Platin, Palladium, Rhodium, eine Kombination von Platin und Rhodium oder eine Kombination von Platin, Palladium und Rhodium.

Der mindestens eine Teilbereiche A ist zumindest teilweise von einem oder mehreren weiteren Teilbereichen B des einstückigen Durchströmungskörpers umschlossen. Mit anderen Worten ist der Teilbereich A zumindest teilweise im Inneren des einstückigen Durchströmungskörpers angeordnet. In vorteilhaften Ausführungsformen ist der Teilbereich A vollständig von einem oder mehreren weiteren Teilbereichen B umschlossen, mit anderen Worten grenzt der Teilbereich A in solchen Fällen an keinen Randbereich des einstückigen Durchströmungskörpers an.

Der weitere Teilbereich oder die weiteren Teilbereiche B können dabei mit keinem Edelmetall oder ebenfalls mit mindestens einem Edelmetall ausgestattet sein. Das mindestens eine Edelmetall kann gleich oder unterschiedlich zu dem Edelmetall des Teilbereichs A sein. Insbesondere kann der Teilbereich B mit weniger Edelmetall ausgestattet sein als der Teilbereich A, jeweils bezogen auf das Volumen des Teilbereichs.

Das Volumen des mit mindestens einem Edelmetall ausgestatteten Teilbereichs A beträgt vorteilhaft 5 % bis 90 %, insbesondere 10 % bis 80 % des Gesamtvolumens des einstückigen Durchströmungskörpers. Besonders vorteilhaft beträgt das Volumen des Teilbereichs A höchstens 60 %, insbesondere höchstens 50 % des Gesamtvolumens des einstückigen Durchströmungskörpers. Als besonders vorteilhaft hat sich ein Volumen des Teilbereichs A von 15 % bis 30 % des Gesamtvolumens des einstückigen Durchströmungskörpers erwiesen.

Die Form des mit mindestens einem Edelmetall ausgestatteten Teilbereichs A ist nicht weiter beschränkt, insbesondere kann der Teilbereich A punkt-, zylinder- oder kugelförmig sein. Insbesondere können sowohl der einstückige Durchströmungskörper als auch der mit mindestens einem Edelmetall ausgestattete Teilbereich A zylinderförmig, quaderförmig oder scheibenförmig ausgestaltet sein.

Bevorzugt beträgt die Querschnittsfläche des mit mindestens einem Edelmetall ausgestatteten Teilbereichs A senkrecht zur Längsachse des einstückigen Durchströmungskörpers nicht mehr als 80 % der Gesamtquerschnittsfläche des einstückigen Durchströmungskörpers senkrecht zur Längsachse in Richtung der Längsachse, insbesondere nicht mehr als 70 %, bevorzugt nicht mehr als 60 %. Insbesondere beträgt die Querschnittsfläche des Teilbereichs A senkrecht zur Längsachse mehr als 30 % der Gesamtquerschnittsfläche des einstückigen Durchströmungskörpers senkrecht zur Längsachse in Richtung der Längsachse, bevorzugt mehr als 40 %.

Der mit mindestens einem Edelmetall ausgestattete Teilbereich A kann sich entlang der gesamten Länge der Längsachse des einstückigen Durchströmungskörpers erstrecken. Bevorzugt beträgt die Länge des mit mindestens einem Edelmetall ausgestatteten Teilbereichs A entlang Längsachse des einstückigen Durchströmungskörpers nicht mehr als 80 % der Gesamtlänge des einstückigen Durchströmungskörpers entlang der Längsachse, insbesondere nicht mehr als 70 %, bevorzugt nicht mehr als 60 %. Insbesondere beträgt die Länge des Teilbereichs A entlang der Längsachse mehr als 30 % der Gesamtlänge des einstückigen Durchströmungskörpers, bevorzugt mehr als 40 %.

Vorteilhaft werden mindestens 50 % der Umfangsfläche des einstückigen Durchströmungskörpers nicht von dem mit mindestens einem Edelmetall ausgestatteten Teilbereich A gebildet, insbesondere mindestens 80 %, besonders bevorzugt wird die gesamte Umfangsfläche nicht von dem mit mindestens einem Edelmetall ausgestatteten Teilbereich A gebildet.

Vorteilhaft werden mindestens 50 %, insbesondere mindestens 80 % zumindest einer der Stirnseiten nicht von dem mit mindestens einem Edelmetall ausgestatteten Teilbereich A gebildet. In besonders bevorzugter Gestaltung wird diese zumindest eine Stirnseite vollständig nicht von dem mit mindestens einem Edelmetall ausgestatteten Teilbereich A gebildet. Mit anderen Worten grenzt der mit mindestens einem Edelmetall ausgestattete Teilbereich A mindestens an eine Stirnseite nicht an. Insbesondere kann es sein, wenn der mit mindestens einem Edelmetall ausgestattete Teilbereich A an keine der Stirnseiten des einstückigen Durchströmungskörpers angrenzt.

Die Beladung des einstückigen Durchströmungskörpers mit Edelmetall wird so gewählt, dass die Edelmetallausstattung insgesamt möglichst effizient genutzt werden kann. Unter der Beladung mit Edelmetall ist hierbei die gesamte Beladung des einstückigen Durchströmungskörpers mit Edelmetall verstanden, es werden also auch etwaige Edelmetallbeladungen von weiteren Teilbereichen umfasst. Die Beladung mit Edelmetall liegt bevorzugt im Bereich von 0,01 bis 1 g/L, besonders bevorzugt im Bereich von 0,05 bis 0,8 g/L, insbesondere bevorzugt im Bereich von 0,01 bis 0,7 g/L. Die Beladung gibt die Menge des mindestens einen Edelmetalls bezogen auf das Volumen des einstückigen Durchströmungskörpers an.

Bevorzugt ist der Teilbereich A des einstückigen Durchströmungskörpers mit dem mindestens einen Edelmetall in einem Bereich von 0,1 - 10 g/L ausgestattet, insbesondere in einem Bereich 0,5 - 8 g/L. Bevorzugterweise ist der Teilbereich A des einstückigen Durchströmungskörpers mit weniger als 8 g/L des mindestens einen Edelmetalls ausgestattet, insbesondere mit weniger als weniger als 5 g/L. Die Ausstattung gibt in diesem Fallt die Menge des mindestens einen Edelmetalls bezogen auf das Volumen des Teilbereichs A an.

Der weitere Teilbereich oder die weiteren Teilbereiche B des einstückigen Durchströmungskörpers können keine Beschichtung oder beispielsweise eine Washcoat-Beschichtung aufweisen. Zu vorteilhaften Zusammensetzungen der Washcoat-Beschichtung sei auf die oben gemachten Ausführungen verwiesen, die ebenso für die Beschichtung des einstückigen Durchströmungskörpers zutreffen. Der einstückige Durchströmungskörpers kann auch mehrere Teilbereiche aufweisen, die mit mindestens einem Edelmetall ausgestattet sind. Die mehreren Teilbereiche können dabei gleich oder unterschiedlich ausgestattet sein und sich im Fall unterschiedlicher Ausstattung sowohl im Edelmetall, der Kombination von Edelmetallen oder der Menge an Edelmetall oder Edelmetallen unterscheiden. Außerdem kann der einstückige Durchströmungskörper Teilbereiche aufweisen, die mit einer edelmetallfreien Washcoat-Schicht ausgestattet sind.

Beispielsweise kann der einstückige Durchströmungskörper mindestens einen ersten Teilbereich oder mehrere Teilbereiche aufweisen, die mit einer edelmetallfreien Washcoat-Schicht ausgestattet sind und mindestens einen zweiten Teilbereich, der mit mindestens einem Edelmetall ausgestattet ist.

**Die Erfindung betrifft außerdem einen Katalysator,** umfassend einen erfindungsgemäßen einstückigen Durchströmungskörper oder einen mit mindestens einem Edelmetall ausgestatteten Durchströmungskörper hergestellt nach dem erfindungsgemäßen Verfahren und ein Katalysatorgehäuse. Für bevorzugte Ausführungsformen des Verfahrens oder des einstückigen Durchströmungskörpers sei auf die oben gemachten Ausführungen verwiesen.

Der erfindungsgemäße Katalysator kann beispielsweise in Kleinmotoren, insbesondere Zweitaktmotoren, gemischgeschmierte Viertaktmotoren oder getrenntgeschmierte Verbrennungsmotoren verwendet werden, insbesondere zur Abgasnachbehandlung.

Vorteilhafterweise ist das Katalysatorgehäuse aus Stahl gefertigt, beispielsweise aus einem 1.4828, 1.4509 oder 1.4767 Stahl.

Das Katalysatorgehäuse weist vorteilhaft mindestens eine Eintrittsöffnung und mindestens eine Austrittsöffnung auf. Insbesondere weist das Gehäuse mehr Eintrittsöffnungen als Austrittsöffnungen auf.

Die mindestens eine Eintrittsöffnung und die mindestens eine Austrittsöffnung sind bevorzugt an gegenüberliegenden Stirnseiten des Katalysatorgehäuses angeordnet.

Die mindestens eine Eintrittsöffnung und die mindestens eine Austrittsöffnung sind vorteilhaft zumindest teilweise zueinander versetzt angeordnet. In bevorzugter Gestaltung liegen die mindestens eine Eintrittsöffnung und die mindestens eine Austrittsöffnung nicht in Überdeckung zueinander. Die Überdeckung der Eintrittsöffnung und Austrittsöffnung bezieht sich dabei auf die Einströmrichtung eines Abgases durch die jeweilige Eintrittsöffnung, also auf eine Richtung senkrecht zur Fläche der mindestens einen Eintrittsöffnung. Dadurch, dass die mindestens eine Eintrittsöffnung und die mindestens eine Austrittsöffnung zumindest teilweise zueinander versetzt angeordnet sind, insbesondere nicht in Überdeckung zueinander liegen, wird sichergestellt, dass ein Abgasstrom innerhalb des Katalysatorgehäuses umgelenkt wird. Dadurch kann der Strömungsweg des Abgases im Gehäuse auf einfache Weise verlängert und so die Umsetzung verbessert werden.

Der Durchströmungskörper ist bevorzugt so angeordnet, dass beispielswiese zu behandelnde Abgase durch die Eintrittsöffnung in das Katalysatorgehäuse einströmen können, im Katalysatorgehäuse durch den Durchströmungskörper strömen und anschließend durch die Austrittsöffnung ausströmen können.

Das Katalysatorgehäuse kann einstückig gefertigt sein oder aus mehreren Teilen bestehen, bevorzugterweise aus zwei Halbschalen. Der Aufbau aus zwei Halbschalen erlaubt eine besonders einfache Herstellung des Katalysators.

Bevorzugterweise beträgt das Volumen des Durchströmungskörpers mindestens 80 % des vom Katalysatorgehäuse umschlossenen Volumens, insbesondere mindestens 90 %. Besonders vorteilhaft füllt der Durchströmungskörper das Volumen des Katalysatorgehäuses vollständig aus.

Der Durchströmungskörper weist eine Umfangsfläche auf, die vorteilhafterweise mit dem Katalysatorgehäuse in Kontakt steht. Vorteilhaft ist es insbesondere, wenn mindestens 50 % der Umfangsfläche des Durchströmungskörpers mit dem Katalysatorgehäuse in Kontakt stehen, noch vorteilhafter mindestens 70 %, ganz besonders vorteilhaft steht die gesamte Umfangsfläche in Kontakt mit dem Katalysatorgehäuse. Insbesondere ist es vorteilhaft, wenn die Umfangsfläche des Durchströmungskörpers keinen mit Edelmetall ausgestatteten Teilbereich aufweist.

In bevorzugter Gestaltung ist der Durchströmungskörper in das Katalysatorgehäuse eingepresst oder in diesem festgeschweißt. Zusätzliche Befestigungsmittel können vorhanden sein, sind jedoch nicht zwingend erforderlich.

Das Einpressen des Durchströmungskörpers ist insbesondere dann vorteilhaft, wenn es sich bei dem Durchströmungskörper um einen aus in Form gepressten Metalldraht oder Drahtgestrick hergestellten Drahtkörper handelt. Der Durchströmungskörper weist dann eine ausreichend hohe Elastizität auf und ist nach dem Einpressvorgang stabil im Katalysatorgehäuse gehalten.

Dadurch, dass der Durchströmungskörper des Katalysators zumindest zwei Teilbereiche mit unterschiedlichen Mengen katalytisch wirksamen Edelmetalls aufweist, findet die katalytische Reaktion, beispielsweise die Umsetzung eines Abgases, überwiegend oder vollständig in dem mit mindestens einem Edelmetall ausgestatten Teilbereich A statt. Dadurch kann in diesem Teilbereich eine schnelle und starke Erhitzung erfolgen. Der Teilbereich, der mit mindestens einem Edelmetall ausgestattet ist, dient vorzugsweise überwiegend zum Konvertieren von Kohlenwasserstoffen, Kohlenstoffoxiden und/oder Stickoxiden.

Der oder die weiteren Teilbereiche des Durchströmungskörpers, die nicht, mit weniger oder keiner Edelmetallkomponente ausgestattet sind, können vorzugsweise überwiegend zur Partikelreduktion von Abgasen dienen. In Abgasen von gemischgeschmierten Verbrennungsmotoren ist Schmieröl in Tröpfchenform enthalten, das von dem Katalysator verdampft wird. Hierzu ist eine ausreichend hohe Temperatur des Katalysators notwendig. Zudem ist eine ausreichend lange Verweildauer der Öltröpfchen in dem Katalysator notwendig. Der oder die weiteren Teilbereiche werden von dem Teilbereich A bevorzugt schnell erhitzt. Dadurch verbessert sich die partikel reduzierende Wirkung des oder der weiteren Teilbereiche. Öltröpfchen werden verdampft, sobald die hierfür benötigten Temperaturen erreicht sind. Bei heutzutage üblicherweise verwendeten Schmierölen kann die Verdampfungstemperatur beispielsweise in der Größenordnung von 600 °C bis 700 °C liegen. Der oder die weiteren Teilbereiche dienen außerdem zur thermischen Isolierung des Teilbereichs A. Auch für Katalysatoren, bei denen die Partikelreduzierung nicht im Vordergrund steht, ist der oder sind die weiteren Teilbereiche daher vorteilhaft.

**Die Erfindung betrifft außerdem einen Abgasschalldämpfer** umfassend einen erfindungsgemäßen einstückigen Durchströmungskörper oder einen erfindungsgemäß ausgestatteten Durchströmungskörper gemäß den vorangegangenen Ausführungen, einen ersten Schalldämpferraum und einen zweiten Schalldämpferraum und eine Trennwand, wobei die Trennwand zwischen dem ersten und dem zweiten Schalldämpferraum angeordnet ist und eine Verbindungsöffnung aufweist, wobei der Durchströmungskörper in der Verbindungsöffnung angeordnet ist.

Der Abgasschalldämpfer kann auch einen Katalysator wie vorangegangen ausgeführt umfassen.

Ein Abgasschalldämpfer umfasst typischerweise einen Abgaseinlass, einen Abgasauslass und einen in Strömungsrichtung des Abgases zwischen dem Abgaseinlass und dem Abgasauslass angeordneten Durchströmungskörper. Vorteilhafterweise durchströmt bei Anwendung das gesamte Abgas den Durchströmungskörper.

Der Abgasschalldämpfer ist insbesondere der Abgasschalldämpfer eines Zweitaktmotors oder eines gemischgeschmierten Viertaktmotors. Bei derartigen gemischgeschmierten Motoren kann im Abgas Öl enthalten sein. Insbesondere für derartige Verbrennungsmotoren ist der angegebene Aufbau eines Abgasschalldämpfers mit Katalysator vorteilhaft. Auch ein Einsatz des Abgasschalldämpfers für getrenntgeschmierte Verbrennungsmotoren, insbesondere für getrenntgeschmierte Viertaktmotoren, ist möglich. Der Abgasschalldämpfer ist insbesondere für Stromgeneratoren oder ein handgeführtes Arbeitsgerät wie eine Motorsäge, einen Trennschleifer, einen Freischneider, ein Blasgerät, ein Rasenmäher, ein Sprühgerät oder dergleichen vorteilhaft.

Die Rahmenbedingungen für derartige Abgasschalldämpfer in handgeführten Arbeitsgeräten unterscheiden sich in vielerlei Hinsicht von den Rahmenbedingungen beispielsweise im Automobilbereich. Aufgrund des begrenzten zur Verfügung stehenden Bauraums müssen Abgasschalldämpfer in derartigen handgeführten Arbeitsgeräten vergleichsweise klein ausgebildet werden. Gleichzeitig muss ein Kontakt des Bedieners mit heißen Teilen des Arbeitsgeräts vermieden werden. Daher gelten auch im Hinblick auf die Abgastemperaturen strenge Anforderungen.

In vorteilhaften Ausführungen, in denen der Abgasschalldämpfer einen erfindungsgemäßen Katalysator umfasst, ist die mindestens eine Eintrittsöffnung des Katalysators im oder angrenzend zum ersten Schalldämpferraum angeordnet und die mindestens eine Austrittsöffnung des Katalysators im oder angrenzend zum zweiten Schalldämpferraum.

Bevorzugterweise beträgt das Volumen des Durchströmungskörpers nicht mehr als 70 % des vom Abgasschalldämpfer umschlossenen Volumens, insbesondere nicht mehr als 50 %. Besonders vorteilhaft kann es sein, wenn das Volumen des Durchströmungskörpers nicht mehr als 30 % des Volumens des vom Abgasschalldämpfer umschlossenen Volumens beträgt, da dann der Druckverlust des Abgases während des Durchströmens minimal ist.

**Die Erfindung betrifft außerdem ein Verfahren zur Abgasnachbehandlung,** wobei ein Abgasstrom mit einem erfindungsgemäßen einstückigen Durchströmungskörper oder einem erfindungsgemäß ausgestatteten Durchströmungskörper gemäß den vorangegangenen Ausführungen in Kontakt gebracht wird. Die Abgase können beispielsweise aus Verbrennungsmotoren stammen, insbesondere Zweitaktmotoren oder gemischgeschmierten Viertaktmotoren.

Bevorzugt kann der Durchströmungskörper oder der Katalysator in einem Abgasschalldämpfer wie ausgeführt angeordnet sein.

Anhand der nachfolgenden Abbildungen und Beispiele wird die Erfindung eingehender erläutert. Die Ausführungsbeispiele sind jedoch nicht als einschränkend zu verstehen. Gleiche Bezugszeichen kennzeichnen jeweils gleiche Elemente der unterschiedlichen Ausführungsformen.
- **Abbildung 1**: zeigt einen Ausschnitt eines Durchströmungskörpers aus einem in Form gepressten Metalldraht.
- **Abbildung 2**: zeigt verschiedene Geometrien von beschichteten Teilbereichen und Durchströmungskörper-Querschnitten.
- **Abbildung 3**: zeigt mögliche Ausführungsformen für einen Katalysator, bei dem ein Durchströmungskörper in einem Katalysatorgehäuse angeordnet ist.
- **Abbildung 4**: zeigt einen Abgasschalldämpfer, bei dem ein Katalysator in einem Schalldämpfer-Gehäuse angeordnet ist.
- **Abbildung 5**: zeigt eine Messkurve zur Bestimmung der Viskosität einer angedickten Edelmetall-Lösung
- **Abbildung 6**: zeigt die Emission von HC und NOx der unterschiedlich beschichteten Drahtgestricke für unterschiedliche Luft-Kraftstoff-Gemische.
- **Abbildung 7**: stellt die Erhöhung der Abgas-Temperatur von zwei unterschiedlich ausgestatteten Durchströmungskörpern gegenüber.

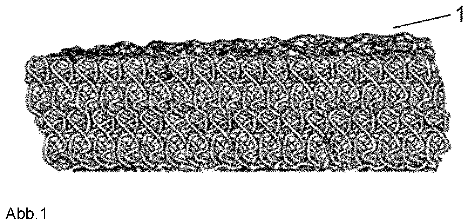

Abbildung 1 zeigt einen Ausschnitt eines Durchströmungskörpers (1) aus einem in Form gepressten Metalldraht, in diesem Fall ein in Form gepresstes Drahtgestrick, der sich vorteilhaft durch das erfindungsgemäße Verfahren beschichten lässt.

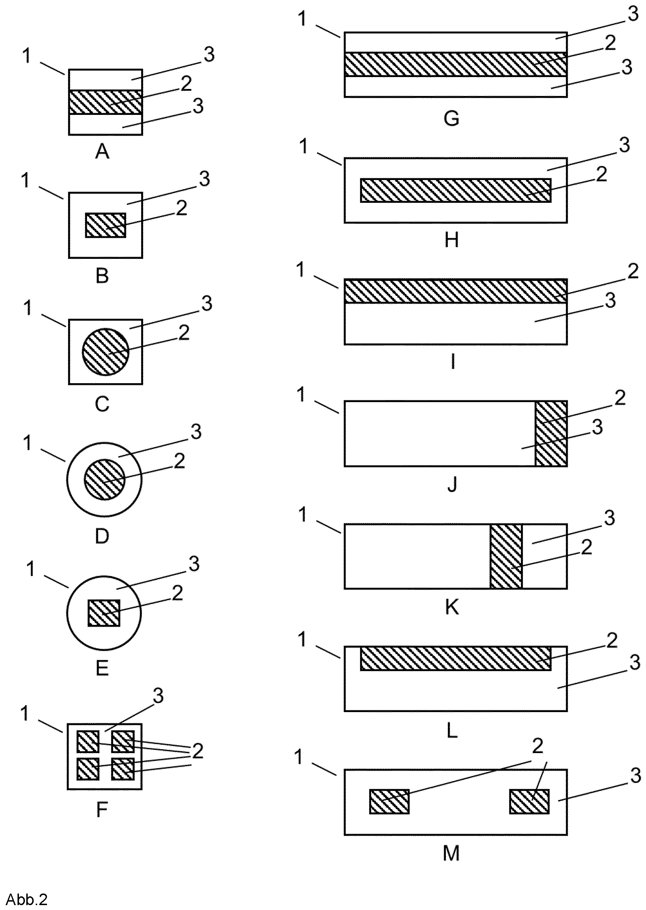

In Abbildung 2 sind verschiedene Geometrien von beschichteten Teilbereichen A (2) (dargestellt durch die schraffierten Bereiche) und Durchströmungskörper-Querschnitten gezeigt. In Abb. 2 A ist der beschichtete Teilbereich A (2) zentral in einem quadratischen Querschnitt des Durchströmungskörpers (1) platziert und von zwei weiteren Teilbereichen (3) umgeben. In Abb. 2 B ist der beschichtete rechteckige Teilbereich A (2) vollständig von einem weiteren Teilbereich (3) umgeben. Die beschichteten runden Teilbereiche A (2) in Abb. 2 C und Abb. 2 D sind zentral in Durchströmungskörpern (1) mit unterschiedlicher Geometrie angeordnet. Abb. 2 E zeigt den runden Querschnitt eines Durchströmungskörpers (1), in dem zentral ein Teilbereich A (2) mit quadratischem Querschnitt angeordnet ist. Auch mehrere beschichtete Teilbereiche A (2) sind möglich, wie in der Ausführungsform in Abb. 2 F gezeigt. Der beschichtete Teilbereich A (2) eines langgezogenen Durchströmungskörpers (1) in Abb. 2 G weist ebenfalls einen rechteckigen Querschnitt auf und ist zentral zwischen weiteren Teilbereichen (3) platziert. In Abb. 2 H ist eine ähnliche Ausführungsform gezeigt, jedoch grenzt der beschichtete Teilbereich A (2) nicht an die Stirnseiten des Durchströmungskörpers. In der Ausführungsform in Abb. 2 I ist der beschichtete Teilbereich A (2) an einer Außenseite platziert, ebenso in Abb. 2 J. Der beschichtete Teilbereich A (2) in Abb. 2 K erstreckt sich über die gesamte Dicke des Durchströmungskörpers (1). In der Ausführungsform in Abb. 2 L ist der beschichtete Teilbereich A (2), ohne an eine der Stirnseiten anzugrenzen, an einer Außenseite platziert. Die Ausführungsform wie in Abb. 2 M weist mehrere zentral und innenliegend platzierte Teilbereiche A (2) auf.

In allen Ausführungsformen kann der weitere Teilbereich (3) oder die weiteren Teilbereiche ebenfalls mit einer edelmetallhaltigen Beschichtung oder mit einer edelmetallhaltigen oder edelmetallfreien Washcoat-Schicht ausgestattet sein. Auch eine Kombination von mehr als zwei unterschiedlichen Teilbereichen ist möglich. So kann beispielsweise eine Ausgestaltung vorteilhaft sein, in der ein erster Teilbereich des Durchströmungskörpers keine Beschichtung aufweist, ein zweiter Teilbereich eine edelmetallfreie Washcoat-Schicht und ein dritter Teilbereich eine erfindungsgemäß aufgetragene edelmetallhaltige Washcoat-Schicht. Der dritte Teilbereich A kann dabei durch das Ausstatten mit einer edelmetallhaltigen Washcoat-Suspension oder durch die Ausstattung einer edelmetallfreien Washcoat-Schicht mit einer edelmetallhaltigen Zusammensetzung erfolgen.

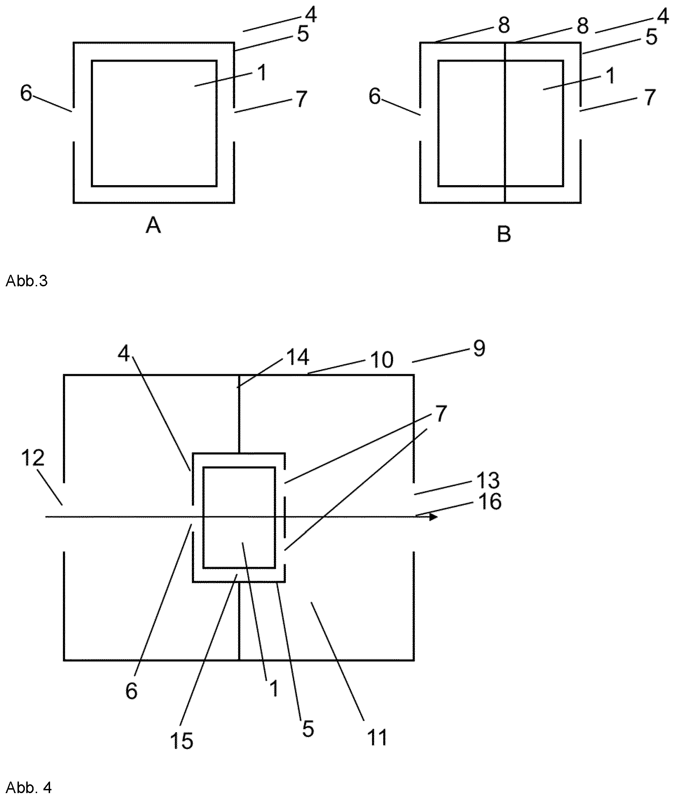

Abbildung 3 zeigt mögliche Ausführungsformen für Katalysatoren (4), bei dem ein Durchströmungskörper (1) in einem Katalysatorgehäuse (5) angeordnet ist, dass jeweils eine Eintrittsöffnung (6) und eine Austrittsöffnung (7) aufweist, ist. Das Katalysatorgehäuse (5) in Abb. 3 B besteht aus zwei Halbschalen (8).

Abbildung 4 zeigt einen Abgasschalldämpfer (9), bei dem ein Katalysator (4) in einem Schalldämpfer-Gehäuse (10) angeordnet ist. Typischerweise umfasst ein Abgasschalldämpfer mehrere, an einem umlaufenden Rand miteinander verbundene Metallschalen, die den Abgasschalldämpferraum (11) umschließen. Die Metallschalen können beispielsweise Tiefziehteile aus Blech sein. Das Schalldämpfer-Gehäuse (10) verfügt über eine Einströmöffnung (12) und eine Ausströmöffnung (13), sowie eine Trennwand (14) mit einer Öffnung (15). Die Trennwand (14) trennt die beiden Abgasschalldämpferräume voneinander. Der Katalysator (4), ist im gezeigten Ausführungsbeispiel derart in der Öffnung (15) angeordnet, dass durchströmendes Abgas entlang der Strömungsrichtung (16) vollständig durch den Katalysator (4) geleitet wird. Das Katalysatorgehäuse (5) weist eine Eintrittsöffnung (6) und zwei Austrittsöffnungen (7) auf. Auch eine andere Anordnung des Katalysators im Strömungsweg kann vorgesehen sein.

Nachfolgend sind die in der vorliegenden Erfindung verwendeten Messmethoden angegeben. Falls keine Testmethode angegeben ist, wurde die entsprechende ISO-Methode zur Bestimmung des betreffenden Parameters verwendet, in der gültigen Fassung zum Anmelde-Zeitpunkt der vorliegenden Anmeldung. Falls keine spezifischen Messbedingungen angegeben sind, erfolgte die Messung bei Raumtemperatur (298.15 K) und Normaldruck (100 kPa).

### Viskosität und Thixotropie-Index

Die statische und dynamische Viskosität von Proben wurden mit einem Rheometer mit Kegel-Platte-Geometrie bestimmt (ThermoFisher "Haake Rheostress 600", MPC60 Ti Platte, 60 mm Durchmesser, Kegel C 20/0,5° Ti, Abstand Kegel-Platte 0,026 mm). Vor der Messung erfolgte die Temperierung der Probe auf 20 °C für 3 min unter einer kontrollierten Scherrate (CRS) von 100 s⁻¹.

Die Messung erfolgte in mehreren Stufen:
- statische Viskosität (CS) oszillierend bei kontrollierter Scherspannung (CSS) von 1 Pa für 20 s
- dynamische Viskosität (CR) rotierend bei CRS von 500 s⁻¹ für 30 s.

Die Auswertung der Messungen erfolgte mit der Software "HAAKE RheoWin".

Der Thixotropie-Index TI der Proben gibt das Verhältnis zwischen statischer Viskosität und dynamischer Viskosität an (TI = CS/CR).

### Spezifische BET-Oberfläche

Die spezifische BET-Oberfläche wurde mit Stickstoff als Adsorbat bei 77 K gemäß der BET-Theorie bestimmt (Mehrpunkt-Methode, ISO 9277:2010).

### Porenvolumen und Porendurchmesserverteilung

Die Bestimmung des Porenvolumens und der Porendurchmesserverteilung erfolgten mit Quecksilberporosimetrie gemäß ISO 15901-1:2022.

### Beispiele

Für alle Beispiele wurde zunächst ein quaderförmiger Drahtkörper (45 x 25 x 15 mm) aus einem Stahl-Draht (1.4767, 0,35mm Durchmesser) homogen mit einer edelmetallfreien Washcoat-Schicht beschichtet. Dafür wurde der Drahtkörper in die Washcoat-Suspension (wässrige Suspension aus Al₂O₃ und Cer-Hydroxidoxid) getaucht, ausgeschleudert und bei 800 °C kalziniert (VB0).

Die so vorbehandelten Drahtkörper wurden mit einer Lösung von Pt-Nitrat in Wasser behandelt (3,5-Gew.-% Pt). Die unbehandelte Lösung wies kein thixotropes Verhalten und eine statische und dynamische Viskosität von <1 mPa*s auf.

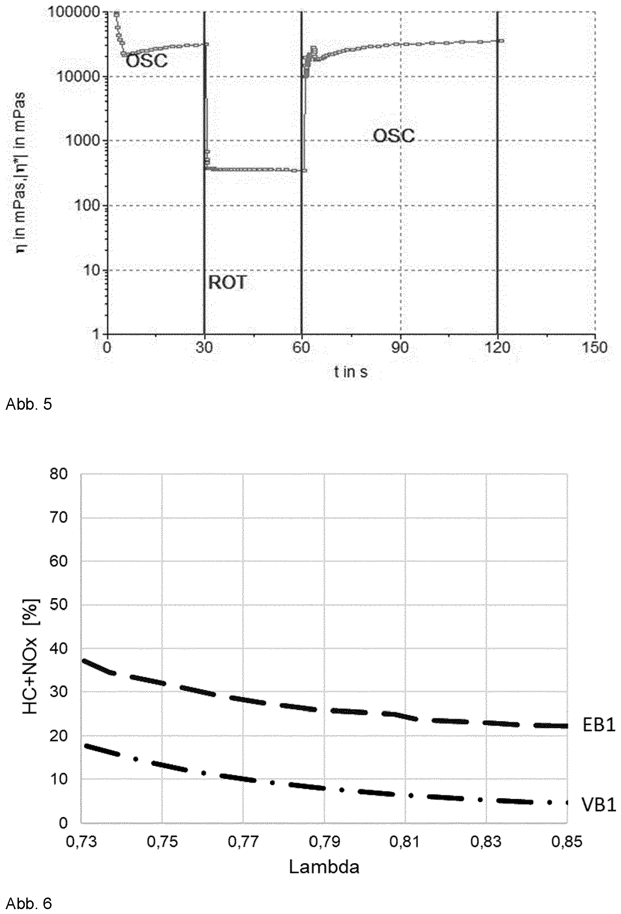

Die wässrige Edelmetall-Lösung wurde mit 2 Gew.-% Natrosol und 0,5 Triethylamin angedickt. Die dynamische Viskosität der Lösung betrug 350 mPa*s, der Thixotropie-Index 86. Die Messkurve zur Bestimmung der Viskosität der angedickten Lösung ist in Abbildung 5 gezeigt.

### VB1 - Homogene Ausstattung mit Edelmetall

Ein vorbehandelter Drahtkörper wurde vollständig in die wässrige Platin-Lösung getaucht. Anschließend wurde der imprägnierte Drahtkörper bei 800 °C in Luft kalziniert.

Die Ausstattung mit Platin betrug insgesamt 60 mg.

### VB2 - Selektive Ausstattung mit unbehandelter Edelmetall-Lösung

Die wässrige Platin-Lösung wurde kanalförmig in den vorbehandelten Drahtkörper pipettiert. Eine reproduzierbare Ausstattung des Drahtkörpers war nicht möglich, da die Lösung teilweise durch den Drahtkörper durchlief und außerdem durch Kapillareffekte nicht gezielt aufgebracht werden konnte.

### EB1 - Selektive Ausstattung mit angepasster Edelmetall-Lösung

Die angedickte Platin-Lösung wurde kanalförmig in den vorbehandelten Drahtkörper pipettiert. Durch Wiegekontrolle wurde sichergestellt, dass die vollständige Lösung auf dem Drahtkörper verblieb. Der Drahtkörper wurde anschließend wie VB1 kalziniert.

Die Ausstattung mit Platin betrug 15 mg.

Die beschichteten Drahtkörper wurden stromabwärts eines Motors in das Auspuffrohr eines Motors eingebaut. Für die Tests wurde ein 2-Takt-Motor verwendet, der mit variierenden Luft-Treibstoff-Verhältnissen (Lambda-Werte unter 1) betrieben wurde. Die Temperatur sowie die Zusammensetzung der Abgase aus dem Auspuffrohr wurden bei laufendem Motor gemessen.

Abbildung 6 zeigt die Reduzierung der Emission von HC und NOx der unterschiedlich beschichteten Drahtgestricke für unterschiedliche Luft-Kraftstoff-Gemische. Gezeigt sind die prozentualen Emissionen im Vergleich zu einem unbeschichteten Katalysator (VB0). Obwohl der erfindungsgemäß selektiv ausgestattete Drahtkörper (EB1) nur über ein Viertel des Edelmetallinventars verfügte, verminderte er die Konzentration der Schadstoffe über den untersuchten Lambda-Bereich ausreichend um die Hälfte gegenüber dem gleichmäßig beschichteten Drahtkörper (VB1).

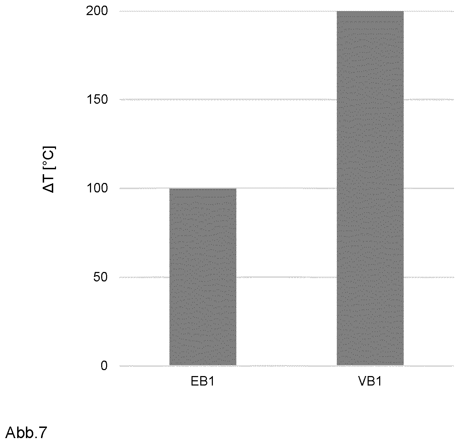

Abbildung 7 stellt die Erhöhung der Abgas-Temperatur bei Verwendung des erfindungsgemäß ausgestatteten Drahtgestricks (EB1) dem vollständig beschichteten Drahtgestrick (VB1) im Vergleich zu einem Drahtgestrick ohne katalytisch aktives Edelmetall (VB0) gegenüber. Die Abgas-Temperatur bei EB1 war signifikant niedriger als beim vergleichbaren homogen beschichteten Drahtgestrick VB1. Eine niedrigere Temperatur bedeutet im Allgemeinen eine Verbesserung der Langzeitstabilität.

Die Kombination von ausreichender Effizienz bei reduziertem Edelmetallinventar zusammen mit der verbesserten Langzeitstabilität demonstriert die vorteilhaften Eigenschaften der erfindungsgemäß ausgestatteten Drahtgestricke.

## Patentansprüche

1. Verfahren zur Ausstattung eines Teilbereichs A eines Durchströmungskörpers mit mindestens einem Edelmetall, wobei das Verfahren die folgenden Schritte umfasst:
(i) Bereitstellung des Durchströmungskörpers,
(ii) Bereitstellung einer Zusammensetzung enthaltend eine Edelmetallkomponente und ein Lösungsmittel,
(iii) Nicht-immersives Beschichten des Teilbereichs A des Durchströmungskörper mit der Zusammensetzung, wobei das nicht-immersive Beschichten durch Aufbringen der Zusammensetzung auf den Teilbereich A erfolgt und die gesamte Menge der Zusammensetzung, die auf den Teilbereich A aufgebracht wird, zunächst auf dem Teilbereich A verbleibt,
(iv) Entfernung der flüchtigen Bestandteile der Zusammensetzung von dem Teilbereich A.

2. Verfahren gemäß Anspruch 1, wobei es sich bei dem Durchströmungskörper um einen einstückigen Körper handelt.

3. Verfahren gemäß Anspruch 1 oder 2, wobei das Gesamtvolumen des Durchströmungskörpers 10 cm³ bis 200 cm³ beträgt.

4. Verfahren gemäß einem der vorangegangenen Ansprüche, wobei es sich bei dem Durchströmungskörper um einen Schaum, einen aus unregelmäßig angeordneten Fasern bestehenden Körper, einen Körper aus Streckmetall oder einen Drahtkörper handelt.

5. Verfahren gemäß einem der vorangegangenen Ansprüche, wobei die Zusammensetzung thixotrope Eigenschaften aufweist.

6. Verfahren gemäß Anspruch 5, wobei die Zusammensetzung eine dynamische Viskosität von nicht mehr als 2500 mPa*s aufweist.

7. Verfahren gemäß einem der Ansprüche 5 oder 6, wobei die Zusammensetzung einen Thixotropie-Index TI von mindestens 5 aufweist.

8. Verfahren gemäß einem der vorangegangenen Ansprüche, wobei die Zusammensetzung ein Verdickungsmittel enthält.

9. Verfahren gemäß einem der vorangegangenen Ansprüche, wobei das nicht-immersive Beschichten durchgeführt wird durch ein Verfahren ausgewählt aus der Gruppe bestehend aus Aufpipettieren, Aufpinseln, Stempeln, Aufstreichen, Einspritzen, Aufrollen oder Drucken.

10. Verfahren gemäß einem der vorangegangenen Ansprüche, wobei das Volumen des beschichteten Teilbereichs A 5 % bis 90 % des Gesamtvolumens des Durchströmungskörpers beträgt.

11. Verfahren gemäß einem der vorangegangenen Ansprüche, wobei mindestens 50 % der Umfangsfläche des Durchströmungskörpers nicht von dem mit mindestens einem Edelmetall ausgestatteten Teilbereich A gebildet werden.

12. Verfahren gemäß einem der vorangegangenen Ansprüche, wobei das nicht-immersive Beschichten auf einem zentralen, zumindest teilweise an keinen Randbereich angrenzenden Teilbereich A des Durchströmungskörpers erfolgt.

13. Einstückiger Durchströmungskörper mit mindestens einem mit mindestens einem Edelmetall ausgestatteten Teilbereich A, wobei der mindestens eine Teilbereich A zumindest teilweise von einem oder mehreren weiteren Teilbereichen B des einstückigen Durchströmungskörpers umschlossen ist.

14. Katalysator, umfassend ein Katalysatorgehäuse und einen einstückigen Durchströmungskörper gemäß Anspruch 13 oder einen mit mindestens einem Edelmetall ausgestatteten Durchströmungskörper hergestellt nach einem der Ansprüche 1- 12.

15. Verfahren zur Abgasnachbehandlung, wobei ein Abgasstrom mit einem einstückigen Durchströmungskörper gemäß Anspruch 13 oder einem mit mindestens einem Edelmetall ausgestatteten Durchströmungskörper hergestellt nach einem der Ansprüche 1- 12, in Kontakt gebracht wird.
